# FASCICULE DE BREVET EUROPEEN

(11) **EP 0 653 344 B1**
(45) Date de publication et mention de la délivrance du brevet: **10.09.1997**
(21) Numéro de dépôt: 94117834.5
(22) Date de dépôt: 11.11.1994
(51) Int. Cl.: B62D 21/15

(54) **Châssis pour véhicule automobile**
Rahmen für Kraftfahrzeug
Chassis for a motor vehicle

(30) Priorité: 16.11.1993 FR 9313625
(43) Date de publication de la demande: 17.05.1995
(73) Titulaire: SMH Management Services AG, CH-2501 Biel (CH)
(72) Inventeur: Thuliez, Jean-Luc, CH-2520 La Neuveville (CH)
(74) Mandataire: de Montmollin, Henri

(56) Documents cités:
- WO-A-92/17349
- DE-B- 1 262 138
- DE-C- 662 373
- DE-U- 9 217 503
- FR-A- 756 447
- GB-A- 444 606
- US-A- 1 867 341
- US-A- 4 171 730

## Description

La présente invention se rapporte à un châssis pour véhicule automobile et en particulier à un châssis du type châssis-poutre présentant des caractéristiques de sécurité passive élevées en cas de choc.

On connaît déjà des châssis pour véhicule automobile comprenant une poutre centrale en acier de très forte section sur laquelle se rattachent des membrures supportant les principaux organes et la carrosserie du véhicule. Par exemple, la publication GB-A-444 606 décrit un châssis de véhicule automobile qui correspond au préambule de la revendication 1. Dans ce cas, le carter du moteur est fixé en porte-à-faux à l'extrémité avant de la poutre centrale, et un ensemble boîte de vitesses-différentiel peut être fixé de même à l'extrémité arrière.

La publication DE-C-662 373 décrit un camion dont le châssis comprend une poutre centrale inclinée lontiduginalement, dont les extrémités sont supportées par les essieux avant et arrière. Cette poutre supporte par des traverses deux longerons horizontaux qui sont plus longs et dont le porte-à-faux avant supporte la cabine avancée du conducteur.

Ce type de châssis, dit châssis-poutre, présente toutefois de nombreux inconvénients dus en particulier à sa grande masse qui nécessite une énergie importante pour sa mise en mouvement et à sa grande rigidité qui s'oppose à une déformation indispensable à l'absorption d'énergie en cas de choc. En effet aucune partie du châssis n'est prévue pour absorber l'énergie d'impact produite en cas d'accident, si bien que la totalité de cette énergie est transmise aux occupants via l'habitacle du véhicule.

Ces inconvénients ont conduit ultérieurement au développement d'un nouveau type de véhicule dans lequel le châssis et la carrosserie sont confondus. Cet ensemble châssis-carrosserie, encore utilisé aujourd'hui, est appelé monocoque ou coque autoporteuse, et comprend un châssis-coque constitué d'un certain nombre d'éléments en tôle emboutie soudés et d'une superstructure constituée de la même façon et assemblée soit de façon rigide soit de façon élastique sur le châssis-coque.

Bien que ce type de châssis offre un bon compromis entre la légèreté et la rigidité lui conférant des caractéristiques de sécurité intéressantes, il présente toutefois un grand nombre de pièces qui doivent être assemblées au cours de nombreuses opérations de soudage qui, même si elles sont réalisées par des robots, rendent les coûts de fabrication du châssis-coque élevés. C'est pourquoi des recherches constantes sont menées pour mettre à la disposition du public des châssis de véhicules automobiles simples et ayant des caractéristiques de sécurité accrues.

L'invention a donc pour but principal de remédier aux inconvénients de l'art antérieur susmentionné en fournissant un châssis pour véhicule automobile du type châssis-poutre de réalisation simple et offrant des caractéristiques de sécurité et de légèreté compatibles avec les exigences actuelles du marché.

A cet effet, l'invention a pour objet un châssis présentant les caractéristiques spécifiées dans la revendication 1.

Grâce à ces caractéristiques, la partie de l'organe allongé s'étendant au-delà des extrémités de la poutre centrale du châssis peut se déformer et absorber de l'énergie en cas de collision frontale, réduisant par là-même la quantité d'énergie transmise à l'habitacle qui est supporté par la poutre centrale.

Selon un mode de réalisation préféré de l'invention, le châssis comprend deux desdits organes allongés, s'étendant de part et d'autre de la poutre centrale.

Cette configuration symétrique à deux organes allongés permet, d'une part, d'améliorer la stabilité du véhicule et, d'autre part, d'augmenter la sécurité des occupants en cas de collision. De plus, l'utilisation de ces deux organes permet de diminuer la section de la poutre centrale et donc de diminuer le poids du châssis sans pour autant affecter sa rigidité.

D'autres avantages et caractéristiques de la présente invention apparaîtront plus clairement à la lecture de la description suivante d'un exemple de réalisation particulier, ladite description étant faite à titre purement illustratif et non limitatif en liaison avec le dessin annexé dans lequel:
- la figure 1 est une vue en perspective d'un exemple de réalisation d'un châssis-poutre selon l'invention; et
- les figures 2 et 3 sont respectivement des vues de dessus et face du châssis de la figure 1.

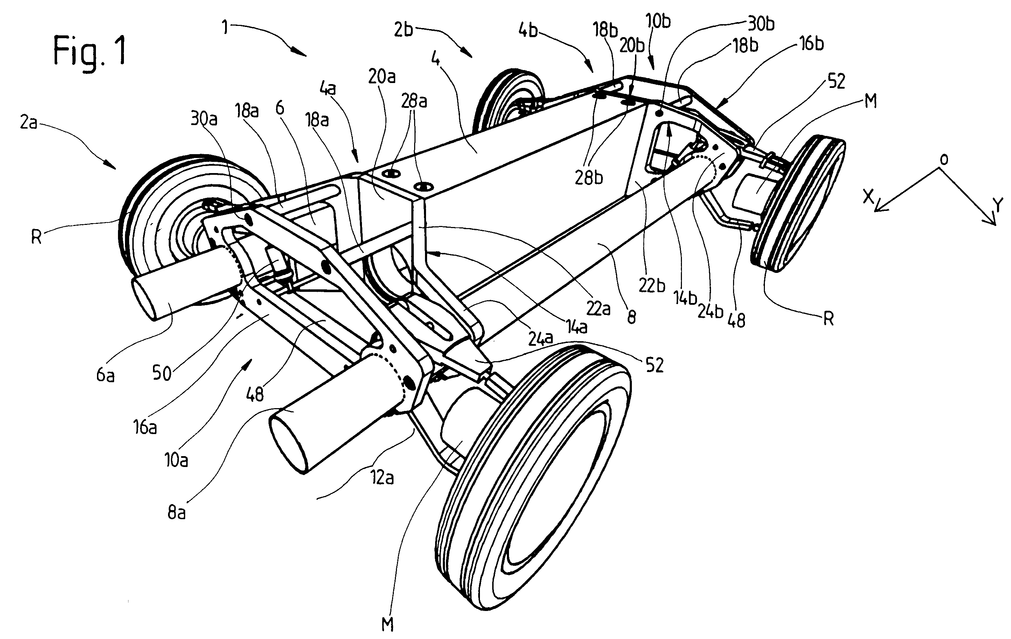

Sur la figure 1 on voit un châssis selon l'invention, désigné par la référence numérique générale 1. Le châssis 1 est destiné, dans l'exemple illustré, à équiper un véhicule automobile à traction électrique à quatre roues motrices R entraînées chacune par un moteur électrique M et est notamment destiné à supporter l'habitacle (non représenté) du véhicule.

Pour faciliter la compréhension de l'invention le train avant 2a et le train arrière 2b d'un tel véhicule ont été représentés montés sur le châssis 1. Par train avant et par train arrière on comprendra dans la présente description l'ensemble des organes qui, d'une part, supportent le véhicule à partir du châssis, et qui, d'autre part, assurent la suspension et l'amortissement du véhicule, y compris les roues R. Ces organes et leur disposition sur le châssis 1 de l'invention seront décrits plus en détail ci-après.

Le châssis 1 est du type châssis-poutre et comprend une poutre centrale 4 aux extrémités de laquelle sont respectivement fixés les trains avant et arrière 2a respectivement 2b. La poutre centrale 4 a la configuration d'un profilé creux qui présente dans l'exemple décrit une section droite rectangulaire dont le grand axe s'étend perpendiculairement au plan du châssis 1, ou en d'autres termes perpendiculairement à la surface sur laquelle est destiné circuler le véhicule équipé du châssis. La poutre centrale 4 est dimensionnée pour assurer notamment la rigidité en flexion et en torsion du châssis par rapport à l'axe de roulis (axe OX au dessin) et par rapport à l'axe de tangage (axe OY au dessin) du véhicule que ce châssis est destiné à équiper. Par ailleurs la poutre centrale 4 délimite la longueur de la partie théoriquement indéformable du châssis au dessus de laquelle se trouvent les occupants du véhicule.

Le châssis 1 comprend en outre deux organes allongés 6 et 8 qui s'étendent parallèlement à la poutre centrale 4 et de part et d'autre de celle-ci. Les organes allongés 6 et 8 sont également formés par des profilés creux présentant une section circulaire.

Il est bien entendu que l'homme de métier pourra, selon des variantes, également choisir d'autres formes de section appropriée.

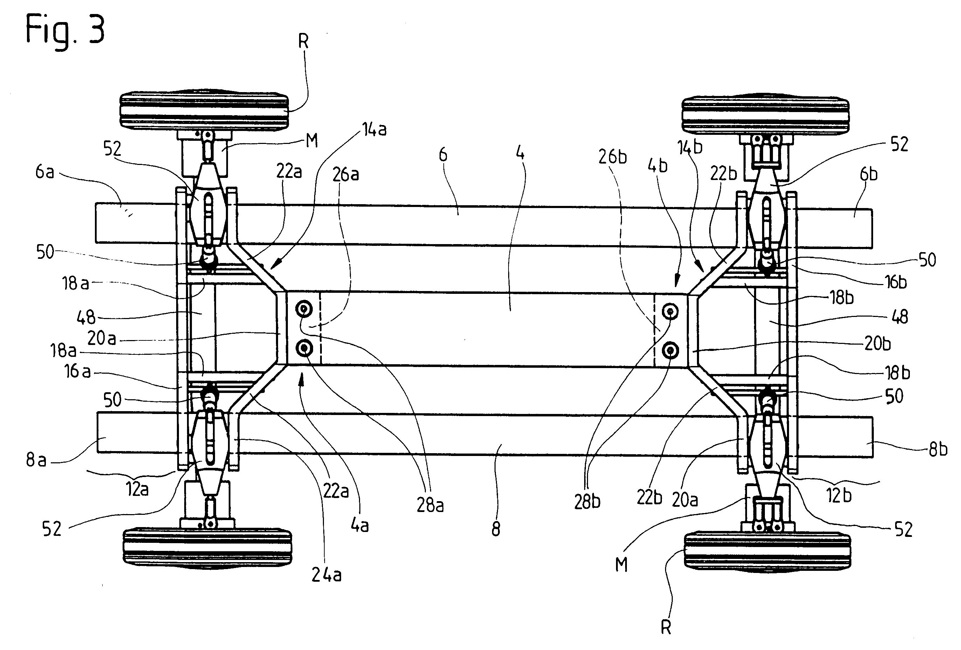

Chaque organe allongé 6, 8 comprend des parties extrêmes avant 6a, 8a, et arrières 6b, 8b par lesquelles il est fixé à la poutre centrale 4 (figure 3).

Plus précisément, chaque organe allongé 6, 8 est relié à la poutre centrale 4 via des moyens de support avant 10a, et arrière 10b fixés respectivement à ses extrémités avant 4a et arrière 4b. Les moyens de support 10a et 10b s'étendent sensiblement perpendiculairement à la direction longitudinale de la poutre centrale 4.

Selon une caractéristique importante du châssis de l'invention, les parties extrêmes 6a, 6b et 8a, 8b s'étendent au-delà des extrémités avant 4a et arrière 4b de la poutre centrale 4 et au-delà des moyens de support 10a, 10b. Les parties extrêmes 6a, 6b et 8a, 8b des organes allongés 6 et 8 déterminent ainsi des zones d'absorption 12a, 12b respectivement avant et arrière destinées à absorber, par déformation des organes allongés 6, 8 notamment selon le direction longitudinale du châssis 1 l'énergie produite lors d'une collision frontale ou arrière avec un autre véhicule ou un obstacle fixe de manière à assurer la sécurité des occupants du véhicule équipé du châssis de l'invention.

Pour privilégier la déformation en compression selon la direction longitudinale des parties extrêmes 6a, 6b et 8a, 8b, les extrémités des tubes 6 et 8 comprennent chacune des amorces de déformation ou des affaiblissements locaux réalisés, par exemple, sous la forme d'une série de fines rainures annulaires parallèles (non représentées).

Selon une variante améliorant davantage l'effet d'absorption des tubes 6, 8, les parties extrêmes 6a, 6b et 8a, 8b peuvent être remplies d'une matière compressible telle qu'une matière synthétique appropriée.

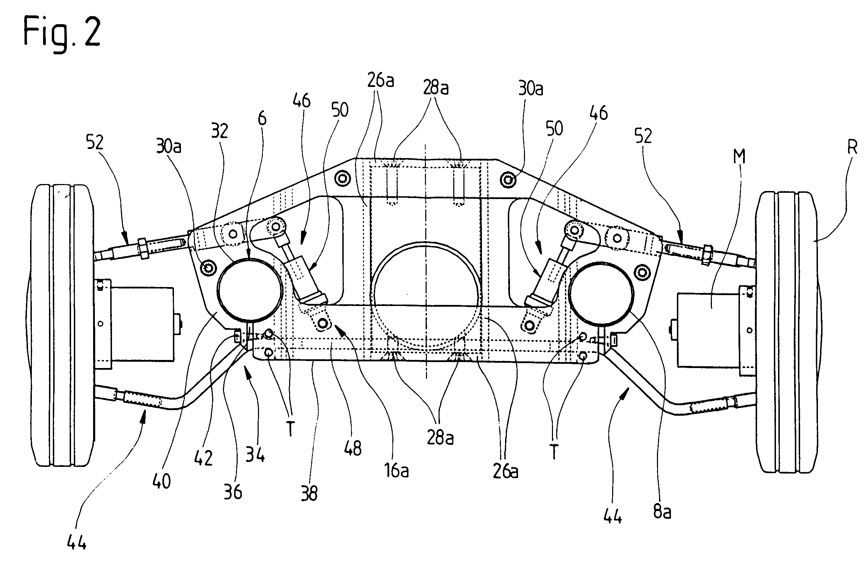

Comme cela ressort des figures 2 et 3 les moyens de support avant 10b et arrière 10b comprennent chacun deux platines 14a, 16a, et 14b, 16b disposées de façon sensiblement parallèle. Les platines 14a et 14b, sont respectivement solidaires des extrémités avant 4a et arrière 4b de la poutre centrale 4 tandis que les platines 16a, 16b sont respectivement solidaires des platines 14a, et 14b et séparées de ces dernières par l'intermédiaire d'une pluralité d'espaceurs dont seuls les espaceurs 18a, 18b clairement visibles au dessin ont été référencés.

Les platines 14a et 14b comprennent chacune un pan central 20a respectivement 20b qui s'étend sensiblement perpendiculairement à la direction longitudinale du châssis et de chaque côté duquel s'étendent latéralement et de façon inclinée vers l'avant respectivement vers l'arrière deux pans intermédiaires 22a, 22b prolongées latéralement par des pans terminaux 24a, 24b s'étendant parallèlement au pan central 20a, 20b.

Les platines 16a, 16b ont chacune la configuration d'une plaque plane qui s'étend parallèlement au pan central 20a respectivement 20b et aux pans terminaux 24a respectivement 24b.

Dans l'exemple de réalisation illustré, la fixation des platines 14a, 14b sur la poutre centrale 4 est réalisée par encastrement respectivement dans les extrémités 4a et 4b de la poutre centrale 4. A cet effet, les pans centraux 20a, 20b des platines 14a, 14b comprennent chacun des nervures 26a, 26b qui, une fois que les platines sont montées, s'étendent et s'encastrent respectivement à l'intérieur des extrémités 4a, 4b du tube central 4. Les nervures 26a, 26b encastrées sont rendues solidaires de la poutre au moyens de boulons 28a, 28b représentés de façon schématique aux figures.

Les platines 16a et 16b sont également chacune fixées à leur platine 14a, 14b respective via les espaceurs 18a, 18b par des boulons 30a, 30b également représentés de façon schématique.

Dans cette exemple, chaque organe allongé 6, 8 s'étend à travers quatre ouvertures de quatre brides à vis alignées ménagées respectivement au voisinage des bords latéraux des platines 14a, 16a et 14b, 16b. Seule une ouverture 32 d'une bride 34 ménagée dans la platine 16a visibles à la figure 2 a été référencée, les autres brides de cette platine et des platines 14a, 14b et 16b non référencées étant identiques. La platine 16a comprend une fente 36 qui s'étend à partir de son bord inférieur 38 et qui débouche dans l'ouverture 32 de sorte que la partie 40 du bord latéral de la platine 16a forme une languette élastique qui peut être serrée sur l'organe allongé, en l'occurrence sur le tube 6, par exemple, par l'intermédiaire d'une vis 42.

Il va de soi que la structure des moyens de support 10a, 10b du châssis de l'invention peut être différente de celle qui vient d'être décrite et qui est formée de deux platines parallèles reliées par des espaceurs boulonnés et l'homme de métier pourra aisément prévoir par exemple des moyens de support comprenant chacun une seule platine de forme appropriée pour recevoir les différents organes d'un train avant ou arrière ou encore des moyens de support comprenant chacun deux platines, parallèles ou non, venant d'une seule pièce par moulage.

La poutre centrale 4, les organes allongés 6, 8 et les moyens de support 10a, 10b peuvent être fabriqués de n'importe laquelle des diverses manières bien connues et en utilisant n'importe lequel des matériaux adéquats également bien connus. Avantageusement, ce matériau est de l'aluminium ou de alliage d'aluminium et la poutre centrale 4, et les organes allongés 6, 8 sont fabriqués par extrusion et les moyens de support 10a, 10b par moulage. De cette matière on peut d'atteindre un compromis intéressant entre la rigidité et la légèreté du châssis. De plus, on notera que les platines 14a, 14b, 16a, et 16b comprennent des évidements pour des raisons de gain de poids.

Dans l'exemple représenté, les moyens de support 10a, 10b du châssis selon l'invention sont aptes à recevoir des moyens de suspension 44 et des moyens d'amortissement 46. Ces derniers sont montés entre chaque paire de platines avant 14a, 16a et arrière 14b, 16b, et ces moyens 44 et 46 forment respectivement avec les deux paires de platines une partie du train avant 2a et du train arrière 2b.

Comme cela ressort particulièrement de la figure 2, chacun des moyens de suspension 44 a la configuration d'une lame élastique 48 dite lame Bertin dont les extrémités sont solidaires des roues R via des porte-fusée (non représentés) et dont la partie centrale, qui s'étend entre les platines avant 14a et 16a et, respectivement arrière 14b et 16b est maintenue dans le sens de la hauteur du châssis avec un jeu latéral par deux paires de tiges T solidaires des platines.

Dans l'exemple illustré, des moyens d'amortissement 46 indépendants sont associés à chaque roue R et comprennent chacun un amortisseur 50 du type à cylindre et piston articulé par une première extrémité entre les platines 14a et 16a et respectivement 14b et 16b et par une deuxième extrémité sur l'extrémité d'une biellette 52 articulée en son centre entre les mêmes platines et dont l'autre extrémité est solidaire du porte-fusée.

Bien entendu les moyens de support 10a, 10b du châssis de l'invention peuvent former des moyens d'ancrage d'autres organes fonctionnels d'un véhicule tels que la direction, la carrosserie, etc.

On notera que le châssis 1 de l'invention est particulièrement bien adapté au cas des véhicules à traction électrique en ce que le tube central 4 peut être avantageusement utilisé comme moyens de logement des batteries du véhicule ce qui contribue par ailleurs à l'abaissement du centre de gravité du véhicule.

Aussi, bien que le châssis de l'invention soit particulièrement adapté à équiper des véhicules à traction électrique compte tenu de sa légèreté, ce châssis peut équiper avantageusement des véhicules à moteur thermique et des véhicules à traction hybride, électrique et thermique. Dans un tel cas, et puisque les paires de platines 14a,16a et 14b, 16b ont la configuration d'un berceau, une de ces paires, par exemple, peut avantageusement recevoir le moteur thermique qui assure directement ou indirectement, la propulsion du véhicule.

On notera que la structure du châssis selon l'invention permet d'ajuster facilement la longueur des parties 6a, 6b, 8a, 8b des organes allongés 6, 8 qui s'étend au-delà des extrémités de la poutre centrale 4 et ainsi d'ajuster la capacité d'absorption d'énergie du véhicule en cas de choc frontal ou arrière pour répondre à des normes qui varient selon les pays ou encore pour obtenir une capacité d'absorption d'énergie constante du châssis quel que soit le poids du châssis, par exemple dans le cas où le châssis équipe une véhicule dont la traction peut être transformer au cours du temps par exemple d'une traction totalement thermique à une traction hybride.

On remarque que contrairement aux structures de châssis classiques en tôle repliée et soudée du type monocoque, le châssis selon l'invention ne comporte aucune soudure mais est composé d'un assemblage par boulonnage de pièces symétriques. L'utilisation de boulons pour l'assemblage des différents éléments de ce châssis le rend aisément démontable et permet le cas échéant de remplacer certain éléments, notamment les organes allongés, si par suite d'un choc ils ont été déformés.

## Revendications

1. Châssis du type châssis-poutre pour véhicule automobile, comprenant une poutre centrale (4), destinée à supporter l'habitacle du véhicule et à délimiter la longueur de la partie théoriquement indéformable du châssis (1) au-dessus de laquelle se trouvent les occupants du véhicule, et au moins un organe allongé (6,8) solidaire de la poutre centrale (4) et s'étendant sensiblement parallèlement à ladite poutre centrale (4), caractérisé en ce que les parties extrêmes (6a,6b,8a,8b) dudit organe allongé (6,8) s'étendent au-delà des extrémités (4a,4b) de la poutre centrale (4) à l'avant et à l'arrière du châssis (1) et sont agencées pour se déformer et absorber de l'énergie en cas de collision.

2. Châssis selon la revendication 1, caractérisé en ce qu'il comprend deux desdits organes allongés (6,8), s'étendant de part et d'autre de la poutre centrale (4).

3. Châssis selon la revendication 1 ou 2, caractérisé en ce qu'il comprend, à chaque extrémité de la poutre centrale (4), des moyens de support (10a,10b) solidaires de la poutre centrale (4) et s'étendant sensiblement perpendiculairement à la direction longitudinale de cette poutre centrale (4), en ce que chacun desdits organes allongés (6,8) est solidaire des moyens de support (10a,10b) et en ce que lesdites parties extrêmes (6a,6b,8a,8b) des organes allongés s'étendent dans les moyens de support (10a,10b) et au-delà.

4. Châssis selon la revendication 3, caractérisé en ce que les moyens de support (10a,10b) comprennent chacun deux platines (14a,16a,14b,16b) sensiblement parallèles, une des platines (14a,14b) de chaque paire étant solidaire d'une extrémité (4a,4b) de la poutre centrale (4) et étant séparée de l'autre platine (16a,16b) par des espaceurs (18a,18b).

5. Châssis selon l'une des revendications précédentes, caractérisé en ce que lesdits organes allongés (6,8) sont formés par des profilés creux.

6. Châssis selon la revendication 5, caractérisé en ce que lesdits profilés creux présentent une section circulaire.

7. Châssis selon l'une des revendications précédentes, caractérisé en ce que chacune desdites parties extrêmes (6a,8a,6b,8b) comprend des amorces de déformation dans la direction longitudinale (OX) du châssis.

8. Châssis selon la revendication 4, caractérisé en ce que lesdits organes allongés (6,8) sont fixés sur les platines (14a,16a,14b,16b) par des moyens de bridage (34).

9. Châssis selon la revendication 4 pour un véhicule comprenant des roues avant (R) et des roues arrière (R), ainsi que des moyens de suspension (44) et des moyens d'amortissement (46) associés auxdites roues (R), caractérisé en ce que les moyens de suspension (44) et les moyens d'amortissement (46) associés aux roues avant et associés aux roues arrières sont respectivement montés sur une première (14a,14b) et sur la deuxième (16a,16b) desdites paires de platines (14a,14b,16a,16b).

10. Châssis selon la revendication 9, caractérisé en ce qu'une des paires (14a,16a) de platines forme un berceau destiné à recevoir des moyens de propulsion.

11. Châssis selon l'une des revendications précédentes, caractérisé en ce que la poutre centrale (4) a la configuration d'un profilé creux ayant une section rectangulaire, le grand axe de ladite section rectangulaire s'étendant perpendiculairement au plan du châssis.

12. Châssis selon l'une des revendications précédentes destiné à équiper un véhicule à propulsion électrique comprenant des batteries, caractérisé en ce que la poutre centrale (4) forme des moyens de logement des batteries.

13. Châssis selon l'une des revendications précédentes, caractérisé en ce que la poutre centrale (4), les organes allongés (6, 8) et les moyens de support (10a, 10b), lorsque ces derniers sont présents, sont réalisés en aluminium ou en alliage d' aluminium.

## Claims

1. Chassis of the beam type for motor vehicle, comprising a central beam (4), which is intended to support the passenger space of the vehicle and to define the length of the theoretically rigid part of the chassis (1) above which the occupants of the vehicle are situated, and at least one elongated member (6, 8) attached to the central beam (4) and extending substantially parallel to said central beam (4), characterized in that the end portions (6a, 6b, 8a, 8b) of said elongated member (6, 8) extend beyond the ends (4a, 4b) of the central beam (4) at the front and the rear of said chassis (1) and are arranged to be deformed and to absorb energy in case of a collision.

2. Chassis according to claim 1, characterized in that it comprises two elongated members (6, 8), extending on either side of the central beam (4).

3. Chassis according to claim 1 or 2, characterized in that it comprises, at each end of the central beam (4) support means (10a, 10b) attached to the central beam (4) and extending substantially perpendicular to the longitudinal direction of this central beam (4), in that each of said elongated members (6, 8) is attached to said support means (10a, 10b) and in that said end portions (6a, 6b, 8a, 8b) of said elongated members extend into the support means (10a, 10b) and beyond.

4. Chassis according to claim 3, characterized in that each of said support means (10a, 10b) comprises two plates (14a, 16a, 14b, 16b) substantially parallel, one of said plates (14a, 14b) being attached to one end (4a, 4b) of the central beam (4) and being separated from the other (16a, 16b) of said plates by spacers (18a, 18b).

5. Chassis according to one of the preceding claims, characterized in that said elongated members (6, 8) are formed by hollow beams.

6. Chassis according to claim 5, characterized in that said hollow beams have a circular cross-section.

7. Chassis according to one of the preceding claims, characterized in that each of said end portions (6a, 8a, 6b, 8b) comprises means for initiating deformation in the longitudinal direction (OX) of the chassis.

8. Chassis according to claim 4, characterized in that said elongated organs (6, 8) are fixed onto the plates (14a, 16a, 14b, 16b) by fastening means (34).

9. Chassis according to claim 4 for a vehicle comprising front and rear wheels (R) as well as suspension means (44) and absorption means (46) used with said wheels (R), characterized in that said suspension means (44) and said absorption means (46) used with said front wheels and used with said rear wheels are respectively mounted on a first (14a, 14b) and the second (16a, 16b) of said pairs of plates (14a, 14b, 16a, 16b).

10. Chassis according to claim 9, characterized in that one of the pairs (14a, 16a) of plates forms a cradle intended to receive the propulsion means.

11. Chassis according to one of the preceding claims, characterized in that the central beam (4) has the configuration of a hollow beam having a rectangular cross-section, the major axis of said rectangular cross-section extending perpendicular to the plane of the chassis.

12. Chassis according to one of the preceding claims intended to equip an electrically propelled vehicle comprising batteries, characterized in that the central beam (4) forms means for housing said batteries.

13. Chassis according to one of the preceding claims, characterized in that the central beam (4), the elongated members (6, 8) and the support means (10a, 10b), when the latter are present, are made of aluminium or of an aluminium alloy.

## Patentansprüche

1. Chassis vom Längsträgertyp für Kraftfahrzeug, umfassend einen zentralen Längsträger (4), der zum Abstützen des Fahrzeugraumes bestimmt ist und zum Begrenzen der Länge der theoretisch undeformierbaren Partie des Chassis (1), über der sich die Insassen des Fahrzeugs befinden, und mit mindestens einem langgestreckten Organ (6, 8), das mit dem zentralen Längsträger (4) verbunden ist und sich im wesentlichen zu diesem zentralen Längsträger (4) parallel erstreckt, dadurch gekennzeichnet, daß die Endpartien (6a, 6b, 8a, 8b) des langgestreckten Organs (6,8) sich über die Enden (4a, 4b) des zentralen Längsträgers (4) an der Front und am Heck des Chassis (1) hinaus erstrecken und ausgebildet sind, um sich im Falle einer Kollision zu deformieren und die Energie zu absorbieren.

2. Chassis nach Anspruch 1, dadurch gekennzeichnet, daß es zwei langgestreckte Organe (6, 8) umfaßt, die sich beidseits des zentralen Längsträgers (4) erstrecken.

3. Chassis nach Anspruch 1 oder 2, dadurch gekennzeichnet, daß es an jedem Ende des zentralen Längsträgers (4) mit dem zentralen Längsträger (4) verbundene und sich im wesentlichen senkrecht zur Längsrichtung des zentralen Längsträgers (4) erstreckende Stützmittel (10a, 10b) umfaßt, daß jedes der langgestreckten Organe (6, 8) mit den Stützmitteln (10a, 10b) verbunden ist und daß jede der Endpartien (6a, 6b, 8a, 8b) der langgestreckten Organe sich in den Stützmitteln (10a, 10b) und über diese hinaus erstreckt.

4. Chassis nach Anspruch 3, dadurch gekennzeichnet, daß die Stützmittel (10a, 10b) jeweils zwei Platinen (14a, 16a, 14b, 16b), die zueinander im wesentlichen parallel sind, umfassen, von denen eine Platine (14a, 14b) jedes Paares mit einem Ende (4a, 4b) des zentralen Längsträgers (4) verbunden ist und von der anderen Platine (16a, 16b) durch Distanzstücke (18a, 18b) getrennt ist.

5. Chassis nach einem der vorangehenden Ansprüche, dadurch gekennzeichnet, daß die langgestreckten Organe (6, 8) aus Hohlprofilen gebildet sind.

6. Chassis nach Anspruch 5, dadurch gekennzeichnet, daß die Hohlprofile einen runden Querschnitt aufweisen.

7. Chassis nach einem der vorangehenden Ansprüche, dadurch gekennzeichnet, daß jede der Endpartien (6a, 8a, 6b, 8b) in Längsrichtung (OX) des Chassis wirksame Deformationsansätze umfaßt.

8. Chassis nach Anspruch 4, dadurch gekennzeichnet, daß die langgestreckten Organe (6, 8) an den Platinen (14a, 16a, 14b, 16b) mittels einer Spanneinrichtung (34) befestigt sind.

9. Chassis nach Anspruch 4 für ein Fahrzeug mit Vorderrädern (R) und Hinterrädern (R) sowie mit Aufhängemitteln (44) und Dämpfungsmitteln (46), die den Rädern (R) zugeordnet sind, dadurch gekennzeichnet, daß die Aufhängemittel (44) und Dämpfungsmittel (46), die den Vorderrädern und Hinterrädern zugeordnet sind, an einem ersten (14a, 14b) bzw. zweiten (16a, 16b) der Platinenpaare (14a, 14b, 16a, 16b) montiert sind.

10. Chassis nach Anspruch 9, dadurch gekennzeichnet, daß eines der Platinenpaare (14a, 16a) eine Wiege bildet, die zur Aufnahme von Antriebsmitteln bestimmt ist.

11. Chassis nach einem der vorangehenden Ansprüche, dadurch gekennzeichnet, daß der zentrale Längsträger (4) die Konfiguration eines Hohlprofiles mit einem Rechteckquerschnitt aufweist, wobei die große Achse des Rechteckquerschnitts sich senkrecht zur Chassisebene erstreckt.

12. Chassis nach einem der vorangehenden Ansprüche, bestimmt zum Ausstatten eines Fahrzeugs mit Elektroantrieb mit Batterien, dadurch gekennzeichnet, daß der zentrale Längsträger (4) Aufnahmemittel für die Batterien bildet.

13. Chassis nach einem der vorangehenden Ansprüche, dadurch gekennzeichnet, daß der zentrale Längsträger (4), die langgestreckten Organe (6, 8) und die Stützmittel (10a, 10b), wenn diese letzteren vorhanden sind, aus Aluminium oder einer Aluminiumlegierung hergestellt sind.
